# FASCICULE DE BREVET EUROPEEN

(11) **EP 0 710 579 B1**
(45) Date de publication et mention de la délivrance du brevet: **23.09.1998**
(21) Numéro de dépôt: 95402417.0
(22) Date de dépôt: 30.10.1995
(51) Int. Cl.: B60K 15/04, F16L 11/12, F16L 51/02

(54) **Dispositif de raccordement monté entre une extrémité d'une tubulure d'admission d'un carburant et un réservoir de véhicule automobile**
Zwischen einen Kraftstoffeinfüllstutzen und einen Kraftfahrzeugtank montierte Verbindungsvorrichtung
Connecting device mounted between an end of a fuel filler pipe and an automotive vehicle tank

(30) Priorité: 04.11.1994 FR 9413191
(43) Date de publication de la demande: 08.05.1996
(73) Titulaire: LE JOINT FRANCAIS, 75008 Paris (FR)
(72) Inventeur: Dedieu, René, F-28410 La Haye (FR); Ricordeau, Jacques, F-72170 Beaumont/Sarthe (FR)
(74) Mandataire: Doireau, Marc

(56) Documents cités:
- EP-A- 0 239 439
- DE-A- 3 040 517
- DE-B- 2 948 065
- GB-A- 131 566
- US-A- 3 448 892
- US-A- 3 908 704
- PATENT ABSTRACTS OF JAPAN vol. 007 no. 207 (M-242) ,13 Septembre 1983 & JP-A-58 105826 (NISSAN JIDOSHA KK) 23 Juin 1983,

## Description

La présente invention concerne un dispositif de raccordement monté entre une extrémité d'une tubulure d'admission d'un carburant et un réservoir de véhicule automobile, ce dispositif étant constitué par un élément tubulaire équipé de moyens destinés à permettre notamment une extension ou allongement de l'élément tubulaire pour maintenir la liaison fluidique entre la tubulure d'admission et le réservoir en cas de choc du véhicule contre un obstacle fixe ou mobile.

Sur de nombreux véhicules automobiles, l'élément tubulaire de raccordement est en caoutchouc et les moyens qui lui permettent de s'allonger sont constitués par un soufflet plissé en accordéon formant des spires serrées. Lors d'un choc qui est de nature à engendrer un étirement de l'élément tubulaire de raccordement, les spires du soufflet doivent normalement se déplier pour entraîner un allongement de l'élément tubulaire afin d'éviter une rupture de la liaison fluidique entre la tubulure d'admission et le réservoir. En effet, une telle rupture peut provoquer une fuite de carburant qui est susceptible de s'enflammer à tout moment. Le soufflet a donc une fonction de sécurité en cas de choc.

Cependant, l'espace réservé pour la mise en place du dispositif de raccordement est généralement très limité compte tenu des pièces environnantes. Il en résulte des limitations géométriques au niveau du soufflet concernant notamment sa longueur, le nombre et le diamètre des spires.

Dans ces conditions, le soufflet ne permet qu'un allongement limité de l'élément tubulaire de raccordement, et cet allongement peut s'avérer insuffisant pour que le soufflet puisse assurer sa fonction de sécurité de façon satisfaisante.

En outre, le faible nombre de spires du soufflet et le diamètre limité de ces spires augmentent l'effort qui doit être exercé sur le soufflet pour permettre aux spires de se déplier, cet effort devant être inférieur à celui qui est susceptible d'entraîner un déchaussage de l'élément tubulaire de raccordement au niveau des moyens qui assurent sa fixation côté tubulure d'admission et côté réservoir.

Autrement dit, dans le cas d'un choc violent latéral, avant ou arrière, l'effort appliqué sur les spires du soufflet est généralement suffisant pour entraîner le dépliage des spires. Cependant, cet effort qui s'applique également au niveau des moyens de fixation de l'élément tubulaire de raccordement côté tubulure d'admission et côté réservoir, peut s'avèrer trop important et provoquer un fluage du caoutchouc pouvant entraîner un déchaussage de l'élément tubulaire de raccordement au niveau des moyens de fixation constitués par des colliers de serrage ou des moyens encliquetables, par exemple. Dans ce cas, la fonction de sécurité du soufflet n'est plus assurée.

En outre, l'extrémité de la tubulure d'admission de carburant et l'entrée du réservoir ne sont généralement pas axialement alignées l'une avec l'autre, ce qui nécessite la présence d'au moins un coude au niveau de l'élément tubulaire de raccordement, ce qui ne facilite pas sa mise en place.

Un élément tubulaire de raccordement du type précité est notamment décrit dans le document US-A-3 448 892.

L'objet de l'invention est de pallier les inconvénients d'un dispositif de raccordement à soufflet tout en procurant d'autres avantages.

A cet effet, l'invention propose un dispositif de raccordement monté entre une extrémité d'une tubulure d'admission d'un carburant et un réservoir de véhicule automobile, ce dispositif étant constitué par un élément tubulaire équipé de moyens destinés à permettre une extension de l'élément tubulaire pour maintenir la liaison fluidique entre la tubulure d'admission et le réservoir en cas de choc, dispositif qui est caractérisé en ce que les moyens destinés à permettre une extension ou allongement de l'élément tubulaire de raccordement sont constitués par au moins un pli formé par l'élément tubulaire et rabattu le long de celui-ci, ce pli étant dépliable en cas de choc.

La présence de ce pli permet un allongement de l'élément tubulaire de raccordement qui correspond globalement au double de la longueur du pli dans la direction axiale de l'élément tubulaire, mais l'invention ne se limite pas à la présence d'un seul pli.

Selon une autre caractéristique de l'invention, l'élément tubulaire de raccordement, côté tubulure d'admission, est déformé pour obtenir une ondulation ou spire formant un élément d'articulation pour assurer une prise d'angle entre l'extrémité de la tubulure d'admission et l'entrée du réservoir.

Selon une autre caractéristique de l'invention, l'élément tubulaire de raccordement est réalisé en une seule pièce constituée en un matériau élastomère, par exemple, tel que du nitrile-polychlorure de vinyle.

A titre d'exemple, un élément tubulaire de raccordement qui présente une longueur de 150 mm peut être allongé jusqu'à une longueur de 250 mm grâce à la présence de ce pli. Cet allongement de l'ordre de 100 mm ne pourrait pas être obtenu au moyen d'un soufflet classique.

Un tel élément tubulaire de raccordement offre également l'avantage de pouvoir s'allonger lorsqu'il est soumis à un effort notablement inférieur à celui qui s'avère nécessaire pour obtenir un dépliage des spires d'un soufflet, c'est-à-dire qu'on limite notablement le risque de déchaussage de l'élément tubulaire de raccordement au niveau de ses moyens de fixation côté tubulure d'admission et côté réservoir.

Un dispositif de raccordement selon l'invention est donc de nature à remplir la fonction de sécurité requise pour un tel dispositif en cas de choc, alors que cette fonction de sécurité est très aléatoire dans le cas d'un soufflet.

D'autres avantages, caractéristiques et détails de l'invention vont ressortir de la description explicative qui va suivre faite en référence aux dessins annexés donnés uniquement à titre d'exemple et dans lesquels :
- la figure 1 est une vue en coupe longitudinale du dispositif de raccordement selon l'invention avant montage,
- la figure 2 est une vue semblable à celle de la figure 1 où le dispositif de raccordement est étiré au maximum de sa longueur, et
- la figure 3 est une vue en coupe longitudinale où le dispositif de raccordement est représenté en position montée.

D'une manière générale, le carburant est introduit à une extrémité d'une tubulure d'admission qui conduit le carburant jusqu'à un réservoir. Pour des questions de montage et de mise en place, la tubulure d'admission n'est pas constituée en une seule pièce et elle comprend notamment un dispositif de raccordement monté entre l'autre extrémité de la tubulure d'admission et l'entrée du réservoir.

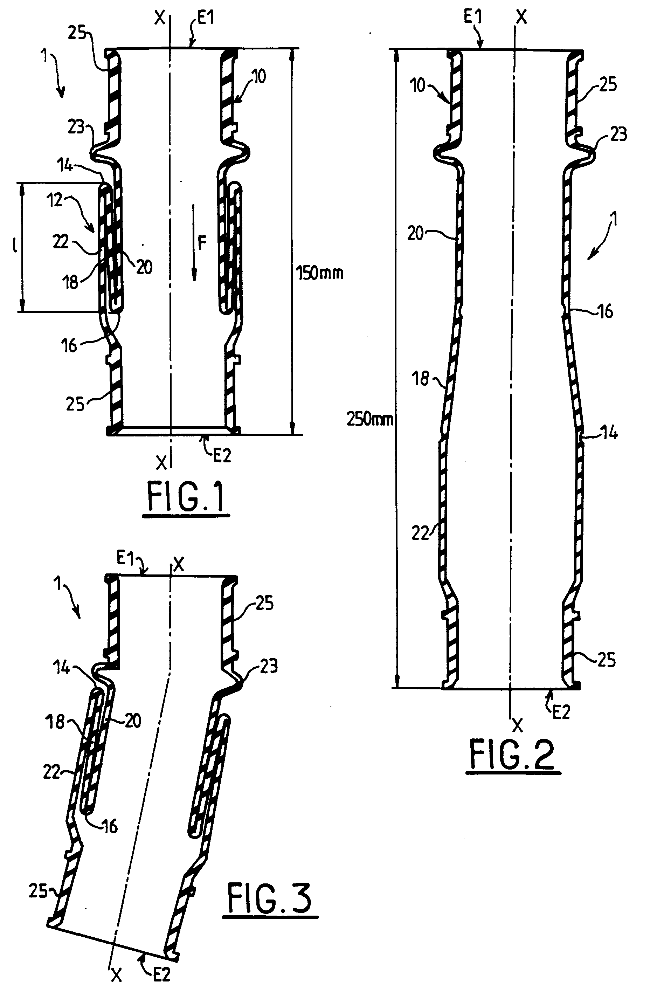

La figure 1 représente un dispositif de raccordement 1 selon l'invention et tel qu'il se présente après fabrication et avant montage. Ce dispositif de raccordement est constitué par un élément tubulaire 10 sensiblement rectiligne, d'axe X-X, et qui comporte deux extrémités E1 et E2.

Dans sa partie centrale, l'élément tubulaire de raccordement 10 comprend au moins un pli 12 rabattu le long dudit élément et qui est dépliable en cas de choc. Le pli 12 comprend deux extrémités coudées 14 et 16 qui sont réunies l'un à l'autre par une partie cylindrique intermédiaire 18 qui s'étend axialement sur une longueur l. Cette partie cylindrique intermédiaire 18 se trouve comprise entre deux parties cylindriques respectivement interne 20 et externe 22 de l'élément tubulaire 10 et qui s'étendent chacune sur une longueur l.

Il est à noter que le coude 14 se situe à l'extérieur de l'élément tubulaire 10 et du côté de l'extrémité E1, alors que le coude 14 se trouve situé à l'intérieur de l'élément tubulaire 10 et du côté de l'extrémité E2. Ainsi, en considérant un sens d'écoulement du carburant suivant la flèche F entre l'extrémité E1 et l'extrémité E2 de l'élément tubulaire de raccordement 10, le carburant s'écoule le long de la partie cylindrique interne 20 sans pouvoir pénétrer entre la partie cylindrique intermédiaire 18 et la partie cylindrique externe 22. On évite ainsi toute déformation intempestive du pli 12 lorsque le carburant s'écoule.

Entre le pli 12 et l'extrémité El de l'élément tubulaire 10, il est prévu une ondulation ou spire 23 obtenue par déformation de l'élément tubulaire 10. Cette ondulation 23 forme une articulation qui permet une prise de rayon entre l'extrémité de la tubulure d'admission et l'entrée du réservoir, comme cela est illustré à la figure 3 lorsque le dispositif de raccordement est monté.

A titre d'exemple, si la longueur de l'élément tubulaire 10 est de 150 mm, la présence du pli 12 lui permet d'atteindre une longueur de 250 mm lorsque le pli 12 est complètement déplié, comme cela est illustré à la figure 2, c'est-à-dire lorsque les parties cylindriques 18, 20 et 22 sont sensiblement alignées les unes avec les autres. Autrement dit, l'allongement est de l'ordre de 100 mm, allongement qui correspond à deux fois la longueur l de la figure 1.

A chaque extrémité E1 et E2, l'élément tubulaire 10 peut comporter une gorge périphérique externe 25 qui est destinée à recevoir un collier de serrage par exemple (non représenté) pour assurer la fixation de l'élément tubulaire 10 côté tubulure d'admission et côté réservoir. Les moyens de fixation peuvent être différents et constitués par des moyens encliquetables par exemple.

D'une manière générale, l'élément tubulaire de raccordement 10 est fabriqué en un matériau qui doit être souple tout en étant suffisamment rigide. Bien entendu, ce matériau doit être également inerte au carburant et résister à l'environnement extérieur. Ce matériau peut être un élastomère, par exemple à base de nitrile-polychlorure de vinyle, ou un matériau thermoplastique.

A titre d'exemple, l'élément tubulaire de raccordement 10 peut avoir une épaisseur d'environ 4 mm, cette épaisseur étant réduite à 2 mm au niveau du pli 12 pour faciliter le dépliage de celui-ci.

Ainsi, en cas de choc du véhicule contre un obstacle fixe ou mobile et qui est susceptible de provoquer un étirement au niveau de l'élément tubulaire de raccordement 10, cet élément a la possibilité de s'allonger plus ou moins pour maintenir en toute sécurité la liaison fluidique entre la tubulure d'admission et le réservoir. Bien entendu, l'élément tubulaire 10 est également apte à se déformer dans les autres directions et avec un risque limité d'un déchaussage au niveau de ses moyens de fixation côté tubulure d'admission et côté réservoir.

Dans l'exemple illustré précédemment, l'élément tubulaire 10 ne comprend qu'un seul pli 12, mais il est possible d'en prévoir plusieurs en fonction notamment de l'espace réservé à sa mise en place et à son montage.

## Revendications

1. Dispositif de raccordement monté entre une extrémité d'une tubulure d'admission d'un carburant et un réservoir de véhicule automobile, ce dispositif étant constitué par un élément tubulaire (10) équipé de moyens (12) destinés à permettre une extension de l'élément tubulaire (10) pour maintenir la liaison fluidique entre la tubulure d'admission et le réservoir en cas de choc, dispositif qui est caractérisé en ce que les moyens destinés à permettre une extension ou allongement de l'élément tubulaire de raccordement sont constitués par au moins un pli (12) formé par l'élément tubulaire (10) et rabattu le long de celui-ci, ce pli (12) étant dépliable en cas de choc.

2. Dispositif de raccordement selon la revendication 1, caractérisé en ce que le repli (12) s'étend sur une longueur axiale (l), l'allongement possible du dispositif de raccordement étant de l'ordre de deux fois cette longueur (l).

3. Dispositif de raccordement selon la revendication 1 ou 2, caractérisé en ce que l'élément tubulaire de raccordement (10) comprend deux extrémités (E1, E2) situées respectivement côté tubulure d'admission et côté réservoir, et en ce que l'élément tubulaire de raccordement (10) comprend vers son extrémité (E1) situé côté tubulure d'admission, une ondulation ou spire (23) formée par déformation de l'élément tubulaire de raccordement (10) pour former une articulation permettant une prise de rayon entre les deux extrémités (E1, E2).

4. Dispositif de raccordement selon l'une quelconque des revendications précédentes, caractérisé en ce qu'il est constitué en une seule pièce.

5. Dispositif de raccordement selon la revendication 4, caractérisé en ce qu'il est constitué en un matériau élastomère ou thermoplastique.

6. Dispositif de raccordement selon la revendication 5, caractérisé en ce que le matériau élastomère est à base de nitrile-polychlorure de vinyle.

## Claims

1. A connection device mounted between one end of a fuel inlet manifold and a tank in a motor vehicle, said device being composed of a tubular element (10) fitted with means (12) designed to permit an extension of the tubular element (10) to maintain the fluid connection between the inlet manifold and the tank in the event of an impact, the device being characterized in that the means designed to permit an extension of the tubular connection element are constituted by at least one fold (12) formed by the tubular element (10) and folded down along the latter, said fold (12) being unfoldable in the event of an impact.

2. A connection device according to claim 1, characterized in that the fold (12) extends along an axial length (1), the possible extension of the connection device being of the order of twice this length (1).

3. A connection device according to either claim 1 or claim 2, characterized in that the tubular connection element (10) comprises two ends (E1, E2) respectively situated on the inlet manifold side and on the tank side, and in that the tubular connection element (10) comprises towards its end (E1) situated on the inlet manifold side, a corrugation or turn (23) formed by the deformation of the tubular connection element (10) to form a hinge permitting the creation of a radius between the two ends (E1, E2).

4. A connection device according to any one of the preceding claims, characterized in that it is formed as one piece.

5. A connection device according to claim 4, characterized in that it is made in an elastomer or thermoplastic material.

6. A connection device according to claim 5, characterized in that the elastomer material is based on nitrile-vinyl polychloride.

## Patentansprüche

1. Verbindungsvorrichtung, die zwischen ein Ende eines Kraftstoffeinfüllstutzens und einen Kraftfahrzeugtank montiert ist, wobei diese Vorrichtung aus einem röhrenförmigen Element (10) gebildet wird, das mix Mitteln (12) ausgerüstet ist, die dazu bestimmt sind, eine Dehnung des röhrenförmigen Elements (10) zu ermöglichen, um die Fluidverbindung zwischen dem Einfüllstutzen und dem Tank im Falle eines Stoßes aufrechtzuerhalten, wobei die Vorrichtung
**dadurch gekennzeichnet** ist, daß die Mittel, die dazu bestimmt sind, eine Dehnung oder Streckung des röhrenförmigen Verbindungselements zu ermöglichen, von wenigstens einer Falte (12) gebildet sind, die von dem röhrenförmigen Element (10) gebildet ist und entlang davon umgeklappt ist, wobei diese Falte (12) im Fall eines Stoßes entfaltbar ist.

2. Verbindungsvorrichtung nach Anspruch 1,
**dadurch gekennzeichnet**, daß die Falte (12) sich entlang einer axialen Länge (l) erstreckt, wobei die mögliche Streckung der Verbindungsvorrichtung im Bereich des Zweifachen dieser Länge (l) ist.

3. Verbindungsvorrichtung nach Anspruch 1 oder 2,
**dadurch gekennzeichnet**, daß das röhrenförmige Verbindungselement (10) zwei Enden (E1, E2) umfaßt, die jeweils an einer Einfüllstutzenseite und an einer Tankseite angeordnet sind, und daß das röhrenförmige Verbindungselement (10) in Richtung seines Endes (E1), das an der Einfüllstutzenseite angeordnet ist, eine Welle oder Windung (23) umfaßt, die durch eine Deformation des röhrenförmigen Verbindungselements (10) gebildet ist, um ein Gelenk zu bilden, das eine Inanspruchnahme eines Wirkungsbereichs zwischen den zwei Enden (E1, E2) ermöglicht.

4. Verbindungsvorrichtung nach einem der vorhergehenden Ansprüche,
**dadurch gekennzeichnet**, daß sie aus einem einzigen Stück gebildet ist.

5. Verbindungsvorrichtung nach Anspruch 4,
**dadurch gekennzeichnet**, daß sie aus einem elastomeren oder thermoplastischen Material gebildet ist.

6. Verbindungsvorrichtung nach Anspruch 5,
**dadurch gekennzeichnet**, daß das elastomere Material auf der Basis von Polyvinylchlorid-Nitril-Basis ist.
